# EUROPEAN PATENT APPLICATION

(11) **EP 1 792 804 A1**
(43) Date of publication of application: **06.06.2007**
(21) Application number: 06250895.7
(22) Date of filing: 20.02.2006
(51) Int. Cl.: B62D 5/04

(54) **Motor-driven power steering system for a vehicle with a device for adjusting the tension of a transmission belt**

(30) Priority: 01.12.2005 KR 2005116463
(71) Applicant: Mando Corporation, Pyeongtaek-si, Gyeonggi-do (KR)
(72) Inventor: Song, Jun-gyu, 1102-504, Geum-gang Apt., Seongnam-si, Gyeonggi-do (KR); Jo, Heegwon, Gungpo-si,Gyeonggi-do (KR); Namgung, Joo, Wonju-si, Gangwon-do (KR)
(74) Representative: Neobard, William John

(57) **Abstract**

Disclosed is a motor-driven steering system capable of easily adjusting tension. The motor-driven steering system comprises a driven pulley (112) connected to a driving pulley (108) of the motor through a belt (110), a gear housing (150) for surrounding the driven pulley, a motor housing (148) rotatably connected to the gear housing by means of a hinge shaft (401), and a guide (205) formed at one side portion of the gear housing. The distance between the driving pulley and the driven pulley is adjusted by rotating the motor housing relative to the gear housing, thereby providing the motor-driven steering system having a simple construction and capable of easily adjusting the tension of the belt.

## Description

The present invention relates to a motor-driven steering system.

Embodiments are capable of easily adjusting tension thereof. Embodiments relate to a motor-driven steering system capable of easily adjusting tension of a belt by adjusting the distance between a driving pulley and a driven pulley.

As generally known in the art, a steering system of a vehicle allows a driver to freely control the traveling direction of the vehicle by rotating a steering wheel. That is, the steering system allows the vehicle to travel in any direction required by the driver by changing the direction of front wheels.

In order to steer wheels at a state in which a vehicle has been stopped, a power greater than the frictional force between the wheels and the road surface is required, in particular, the frictional force increases as the weight of a vehicle increases and/or as the width of the wheel becomes wider. Power steering systems have been developed in order to enable a driver to steer the wheels with reduced power. Such power steering systems are classified into a hydraulic steering system utilizing hydraulic pressure and a motor-driven steering system utilizing an electric motor.

The hydraulic steering system operates a hydraulic pump using the rotating force of an engine and feeds operating fluid into a driving unit installed in a steering shaft or a rack bar, thereby assisting the driver's steering effort.

In a motor-driven steering system, an electronic control unit drives a motor according to the driving state of the vehicle, which is detected by a vehicle speed sensor or torque sensor, thereby assisting the driver's steering action.

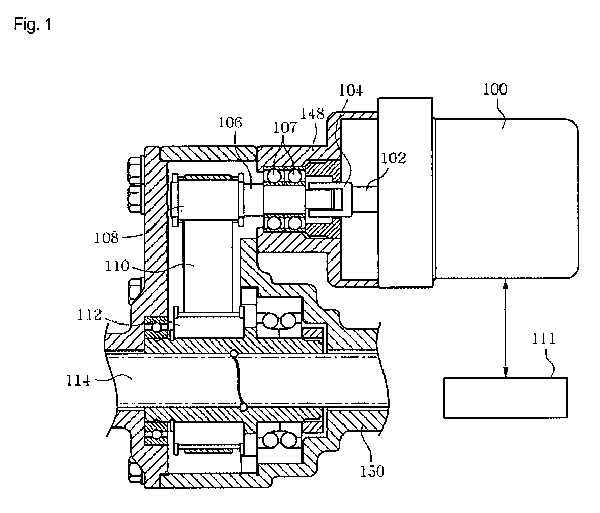

FIG. 1 is a partial longitudinal sectional view of a conventional motor-driven steering system.

As shown in FIG. 1, the motor-driven steering system includes a motor 100, a motor shaft 102, a coupling 104, a pulley shaft 106, a pulley shaft bearing 107, a driving pulley 108, a belt 110, a driven pulley 112, a rack bar 114, a motor housing 148, and a gear housing 150.

The rack bar 114 linearly moves in the left or right direction according to the rotation of the driven pulley 112, which is aligned on an outer surface of the rack bar 114.

The pulley shaft 106 has one end connected to the motor shaft 102, and the other end provided with the driving pulley 108.

The coupling 104 connects the motor shaft 102 and the pulley shaft 106, so that the rotating force of the motor shaft 102 generated by the motor 100 can be transmitted to the pulley shaft 106. The pulley shaft 106 is provided at one side thereof with the pulley shaft bearing 107. In addition, the belt 110 is wound around the driving pulley 108 and the driven pulley 112.

When the motor 100 is driven by an electronic control unit 111, the rotating force of the motor 100 is transmitted to the rack bar 114 via the motor shaft 102, the coupling 104, the pulley shaft 106, the driving pulley 108, the belt 110, and the driven pulley 112, thereby assisting the linear movement of the rack bar 114.

The motor housing 148 is constructed so as to partially accommodate the motor 100 therein. The gear housing 150 is constructed so as to surround one side of the rack bar 114. The motor housing 148 can be detached from the gear housing 150, but the motor housing 148 may move together with the driving pulley 108, the pulley shaft 106, the coupling 104, and the motor shaft 102.

Therefore, when the position of the motor housing 148 is adjusted, the distance between the driving pulley 108 and the driven pulley 112 is also adjusted, so that it is possible to adjust the tension of the belt 110.

However, since the rotating force of the motor 100 cannot be fully transmitted to the rack bar 114 if the belt 110 is loosened, it is necessary to properly maintain the tension of the belt 110.

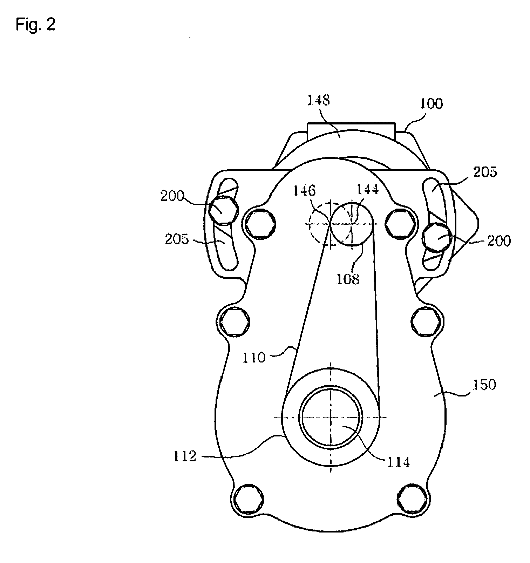

FIG. 2 is a partial sectional view of the conventional motor-driven steering system.

The driving pulley 108 may be rotated about the rotational center 144 thereof, and the motor housing 148 may be rotated about the rotational center 146 thereof.

The driving-pulley's rotational center 144 is spaced from the motor housing's rotational center 146. That is, the driving-pulley's rotational center 144 is positioned on the right side of the motor housing's rotational center 146 when viewed from FIG. 2.

When the motor housing 148 is rotated counterclockwise about the driving pulley's rotational center 144, the driving pulley 108 is also rotated counterclockwise, so that the distance between the driving pulley 108 and the driven pulley 112 becomes larger, thereby increasing the tension of the belt 110.

Fixing bolts 200 are used to fix the position of the motor housing 148 after the motor housing 148 has been rotated clockwise or counterclockwise about the motor housing's rotational center 146. In addition, elongated slots 205 are formed in the gear housing 150 along the moving route of the fixing bolts 200.

In the conventional motor-driven steering system, it is necessary to move the fixing bolt 200 clockwise or counterclockwise by a relatively long distance in order to adjust the tension of the belt 110 if the distance between the motor housing's rotational center 146 and the driving-pulley's rotational center 144 is narrowed.

In addition, the conventional motor-driven steering system must include two fixing bolts 200 and two elongated slots 205, thereby complicating the structure of the steering system.

It is an object of the invention to at least partly avoid problems of the prior art.

In order to accomplish this object, there is provided a motor-driven steering system including a motor for providing an assistant steering force and capable of easily adjusting tension, the motor-driven steering system comprising: a driven pulley connected to a driving pulley of the motor through a belt; a gear housing for surrounding the driven pulley; a motor housing rotatably connected to the gear housing by means of a hinge shaft; and a guide formed at one side portion of the gear housing.

The above and other objects, features and advantages of the present invention will be more apparent from the following detailed description taken in conjunction with the accompanying drawings, in which:
FIG. 1 is a partial longitudinal sectional view of a conventional motor-driven steering system;
FIG. 2 is a partial sectional view of the conventional motor-driven steering system;
FIG. 3 is a partial longitudinal sectional view of a motor-driven steering system embodying the invention; and
FIG. 4 is a partial sectional view of a motor-driven steering system embodying the invention.

In the various figures, like reference signs indicate like parts. In the following description of the embodiments of the present invention, a detailed description of known functions and configurations incorporated herein will be omitted when it may obscure the subject matter of the present invention.

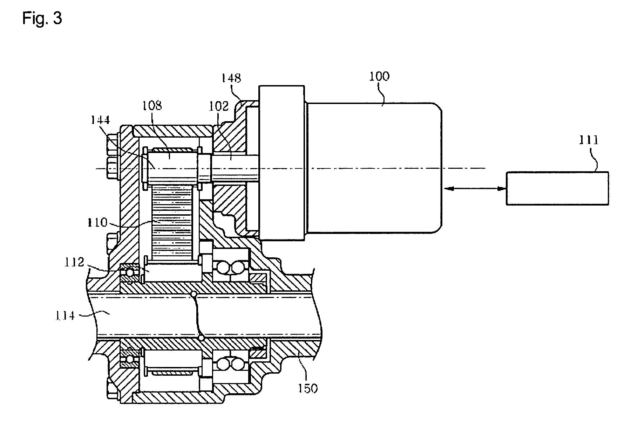

Referring to FIG. 3, a motor-driven steering system includes a motor 100, a motor shaft 102, a driving pulley 108, a belt 110, a driven pulley 112, a rack bar 114, a motor housing 148, and a gear housing 150.

The motor 100, which is driven by receiving a signal from an electronic control unit 111, has a motor shaft 102 extending to the exterior. In addition, the driving pulley 108 is installed on an end portion of the motor shaft 102, so that the driving pulley 108 is rotated together with the motor shaft 102.

In this motor-driven steering system, since the driving pulley 108 is formed on the outer surface of one side of the motor shaft 102, the steering system does not require a coupling 104 and a pulley shaft bearing 107 shown in FIG. 1. Therefore, the construction of the steering system becomes simplified, and the number of components becomes reduced, thereby significantly reducing manufacturing cost and time for the steering system.

The belt 110 has been wound around the driving pulley 108 and driven pulley 112. Therefore, when the motor 100 is rotated, the rotating force of the motor 100 is transmitted to the rack bar 114 via the motor shaft 102, the driving pulley 108, the belt 110, and the driven pulley 112, thereby assisting the linear movement of the rack bar 114 in the left or right direction and driver's steering effort.

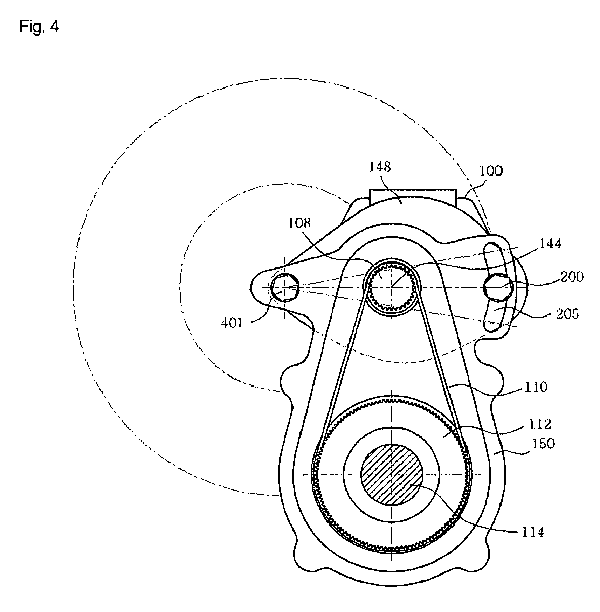

Referring to FIG. 4, the motor housing 148 and the gear housing 150 are coupled with each other through a hinge shaft 401, so that the motor housing 148 and the gear housing 150 can be rotated relative to each other about the hinge shaft 401.

In addition, a fixing bolt 200 and an elongated slot 205 are provided in opposition to the hinge shaft 401.

The fixing bolt 200 is used to fix the motor housing 148 after the motor housing 148 has been rotated by a predetermined range. The fixing bolt 200 passes through the elongated slot 205 and is inserted into the motor housing 148.

The elongated slot 205, which serves as a guide when the motor housing 148 is rotated about the hinge shaft 401, is formed in a circular arc shape having the center on the hinge shaft 401.

Hereinafter, description will be given with respect to the procedure of adjusting the tension of the belt in the motor-driven steering system having the above-mentioned construction.

When the belt 110 is loosened, that is, when the tension of the belt 110 is weakened, it is necessary to enlarge the distance between the driving pulley 108 and the driven pulley 112 in order to tighten the belt 110. This procedure is as follows:

First, the worker releases the fixing bolt 200, so that the motor housing 148 and the gear housing 150 can be rotated relative to each other.

Thereafter, the motor housing 148 is rotated counterclockwise by a predetermined angle about the hinge shaft 401, so as to tighten the belt 110. In this case, when the motor housing 148 is rotated, the driving pulley 108 is also rotated counterclockwise about the hinge shaft 401, so that the distance between the driving pulley 108 and the driven pulley 112 becomes larger.

Finally, the worker fastens the fixing bolt 200, thereby fixing the position of the motor housing 148.

In contrast, when the tension of the belt 110 is too tight, it is necessary to reduce the tension of the belt 110. In this case, the distance between the driving pulley 108 and the driven pulley 112 can be reduced by rotating the motor housing 148 clockwise, thereby reducing the tension of the belt 110.

In embodiments of the motor-driven steering system, the tension of the belt can be easily adjusted.

Also, since the motor-driven steering system requires only one fixing bolt 200, the construction of the steering system is simpler than that of conventional motor-driven steering systems requiring two fixing bolts 200 and two elongated slots 205.

As described above, embodiments of the motor-driven steering system can adjust the tension of the belt through adjusting the distance between the driving pulley and the driven pulley using the hinge shaft, the elongated slot, and the fixing bolt, thereby providing the motor-driven steering system having a simple construction and capable of easily adjusting the tension of the belt.

An embodiment of the invention has now been described with reference to an example. The invention itself is not restricted to the described features but is only limited by the following claims.

## Claims

1. A motor-driven steering system including a motor for providing an assistant steering force, the motor-driven steering system comprising:
a driven pulley connected to a driving pulley of the motor through a belt;
a gear housing for surrounding the driven pulley;
a motor housing rotatably connected to the gear housing by means of a hinge shaft; and
a guide formed at one side portion of the gear housing, whereby tension may be adjusted.

2. A motor-driven steering system according to claim 1, wherein the hinge shaft and the guide are formed in opposition to each other about the driving pulley.

3. A motor-driven steering system according to claim 2, wherein the guide is an elongated slot having a circular arc shape.

4. A motor-driven steering system according to claim 3, further comprising a bolt which passes through the elongated slot and is inserted into the gear housing.
